(19) Europäisches Patentamt / European Patent Office / Office européen des brevets

(11) **EP 2 601 618 B1**

(12) **EUROPEAN PATENT SPECIFICATION**

(45) Date of publication and mention
of the grant of the patent:
**01.10.2014 Bulletin 2014/40**

(21) Application number: **10751825.0**

(22) Date of filing: **05.08.2010**

(51) Int Cl.:
**G06K 9/62** (2006.01)

(86) International application number:
**PCT/EP2010/061439**

(87) International publication number:
**WO 2012/016594 (09.02.2012 Gazette 2012/06)**

(54) **APPARATUS AND METHOD FOR ANALYZING BULKY DATA**

VORRICHTUNG UND VERFAHREN ZUR ANALYSE VON UMFANGREICHEN DATENMENGEN

APPAREIL ET PROCÉDÉ PERMETTANT D'ANALYSER DES DONNÉES VOLUMINEUSES

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**12.06.2013 Bulletin 2013/24**

(73) Proprietor: **Fraunhofer-Gesellschaft zur Förderung der angewandten Forschung e.V.
80686 München (DE)**

(72) Inventors:
• **NIKITINA, Lialia
53773 Hennef (DE)**
• **CLEES, Tanja
53227 Bonn (DE)**

(74) Representative: **Schenk, Markus
Patentanwälte Schoppe, Zimmermann,
Stöckeler, Zinkler & Partner
Postfach 246
82043 Pullach bei München (DE)**

(56) References cited:
• **THEODORIDIS S; KOUTROUMBAS K: "Pattern Recognition", 1 January 2009 (2009-01-01), Academic Press, XP002653079, Document consists of 2FP, v-xiii, 262-263, 594-637,652-657,740-743,772-779,814-825,83 2-837 Chapters 5.2, 6, 6.3, 11-15, for example pages 263, 596-598, 606, 616-619, 654,656, 742, 772, 815-817, 824, 832, 835; page v - page xiii**
• **T Clees: "STATISTICAL ANALYSIS AND ROBUST OPTIMIZATION OF FORMING PROCESSES AND FORMING-TO-CRASH PROCESS CHAINS", International Journal of Material Forming, 7 April 2010 (2010-04-07), pages 45-48, XP55003526, Retrieved from the Internet: URL:http://www.springerlink.com/content/1w t5258621207787/fulltext.pdf [retrieved on 2011-07-25]**
• **ANDRE STORK ET AL: "Simulated Reality in Automotive Design", CYBERWORLDS, 2007. CW '07. INTERNATIONAL CONFERENCE ON, 24 October 2007 (2007-10-24), pages 23-27, XP031263022, IEEE, PISCATAWAY, NJ, USA ISBN: 978-0-7695-3005-5**
• **I Alberto ET AL: "Multiobjective Evolutionary Algorithms. Pareto Rankings", Monografias del Semin. Matem. Garcia de Galdeano, 2003, pages 27-35, XP055003529, Retrieved from the Internet: URL:http://www.unizar.es/galdeano/actas_pa u/PDF/027.pdf [retrieved on 2011-07-25]**

**Description**

Embodiments according to the invention relating to an analysis of huge amounts of data obtained from experiments and particularly to an apparatus and a method for analyzing bulky data.

In many different technical fields experiments result in a huge amount of data generated during the experiments. For example, in connection with crash-test experiments, one of the largest challenges of crash-test data analysis is the huge amount of data items to be processed. Results of the commonly used finite-element-based crash-test simulation are presented in groups of different information levels.

Points in space (nodes) storing x,y,z-coordinates, velocities, accelerations, stress tensor components, material properties, etc. The number of nodes is very large (millions). Further, elements (solids, shells, beams etc) combine nodes, can also store material properties and other values. The number of elements is also very large (millions). Additionally, parts (b-pillar, tunnel, etc) combine elements, the number of parts is moderate, e.g. several thousands. Further, timesteps combine parts, the number of timesteps is moderate, e.g. several hundreds.

The total number of data items is then

$$N_{data} = (N_{nodes} * N_{values\_per\_node} + N_{elements} * N_{values\_per\_element}) * N_{timesteps}$$

and is usually hundreds of millions. Special methods are required to support processing of such a huge amount of data.

Also, in other technical fields, as for example forming, casting, molding, computational fluid dynamics, medicine, semiconductor process simulation, semiconductor device simulation, network simulation, circuit simulation, electromagnetic fields or electromagnetic compatibility, a huge amount of data is generated and must be analyzed.

Typical tasks of data analysis include a scatter analysis, a causal analysis, a linear sensitivity analysis, a non-linear sensitivity analysis or a metamodeling of the bulky data.

DE10207503, EP 1338883 describe an approach for causal analysis of crash results using a similarity function constructed in these patents. It allows identifying the cause of scatter and observing its propagation, however the method is computationally intensive and not applicable to the amount of data produced by newest crash-test simulations. US7386425 describes an approach to separate influences of design variable changes from bifurcation effects. This approach does not allow finding causal relationships between scatter events. In "Ackermann et al, in: Weimar, Optimization and Stochastic Days 5.0 - November 20-21, 2008" PCA method is used to describe relationships between design variable changes and scatter behavior and to find main tendencies but not the cause of scatter. Being applied to the bulky data all approaches above are very time consuming and their combination is even more expensive computationally. It is very important for the industry to have a strategy and a method for efficient bulky data analysis which allows to solve the above listed tasks simultaneously in appropriate time.

Summary of the Invention

It is the object of the present invention to provide an improved concept for analyzing bulky data, which allows to accelerate the analysis, increase the decision of the analysis and/or reduce the computational complexity of the analysis.

This object is solved by an apparatus according to claim 1 or a method according to claim 24.

An embodiment of the invention provides an apparatus for analyzing bulky data comprising a cluster analyzer, a correlation determiner and a data analyzer. The bulky data comprises a plurality of data items, each data item comprising a data value for each experiment of a plurality of experiments by which the bulky data was obtained. The cluster analyzer is configured to determine a cluster center of a cluster of data items based on a cluster analysis of the plurality of data items. The correlation determiner is configured to calculate a correlation value between the determined cluster center and each data item of the plurality of the data items. A correlation value indicates a correlation strength of the cluster center and a data item. Further, the data analyzer is configured to analyze the bulky data based on calculated correlation values.

Embodiments according to the present invention are based on the center idea that a cluster analysis of the plurality of data items is performed and correlation values between the determined cluster centers and the data items are determined. In this way, a data item with strong correlation to the cluster center can be assigned to a cluster center comprising a similar behavior. Therefore, it may be sufficient to analyze the behavior of the cluster centers or of data items representing the cluster centers to obtain information of the behavior of all the data items assigned to a cluster center. So, the necessary data to be analyzed can be significantly reduced. In comparison to known analyzing methods, results can be obtained more quickly and often with higher precision by using the inventive concept, since known methods are often not able to handle such huge amounts of data, so that more or less accurate approximations must be implemented.

In some embodiments according to the invention, the bulky data represents crash-tests data, forming data, casting data, molding data, fluid dynamic data, medical data, semiconductor process simulation data, semiconductor device simulation data, network simulation data, circuit simulation data, electromagnetic field data or electromagnetic compatibility data. In this way, the apparatus and method for analyzing bulky data can be used in many technical fields.

Some embodiments according to the invention relate to an apparatus for analyzing bulky data with a cluster analyzer determining the cluster center based on a density-based cluster analysis, a k-means cluster analysis, a dendrogram cluster analysis or a spectral cluster analysis. In this way, a very flexible implementation of the cluster analyzer may be possible.

Some embodiments according to the invention comprise a data item adapter calculating a deviation vector of a data item by calculating a deviation value for each data value of the data item. A deviation value is obtained by calculating the difference between the data value and a mean of all data values of the data item. The data item adapter may calculate the deviation vectors of the data items in terms of z-score vectors of the data items.

In some further embodiments according to the invention, the data analyzer performs a scatter analysis, a causal analysis, a linear sensitivity analysis, a non-linear sensitivity analysis or a metamodeling of the bulky data. Therefore, the inventive concept is useful for analyzing bulky data in various ways.

Brief Description of the Drawings

The embodiments according to the invention will be detailed subsequently referring to the appended drawings, in which:

Fig. 1      is a block diagram of an apparatus for analyzing bulky data;
Fig. 2      is a block diagram of an apparatus for analyzing bulky data;
Fig. 3      is a schematic illustration of a density-based clustering;
Fig. 4      is a schematic illustration of a k-means clustering;
Fig. 5      is a schematic illustration of a dendrogram clustering;
Fig. 6      is a schematic illustration of a spectral clustering;
Fig. 7      is a schematic illustration of a Pareto ranking;
Fig. 8      is a schematic illustration of z-score vectors;
Fig. 9      is an example for raw data blocks for all component combinations;
Fig. 10     is a schematic illustration of a sensitivity matrix;
Fig. 11     is an example of data ordering in an experimental data matrix
Fig. 12     is an example of a causal analysis;
Fig. 13     is an example of a partition diagram;
Fig. 14     is a flow chart of a method for analyzing bulky data.

In the following, the same reference numerals are partly used for objects and functional units having the same or similar functional properties and the description thereof with regard to a figure shall apply also to other figures in order to reduce redundancy in the description of the embodiments.

Detailed Description of Embodiments

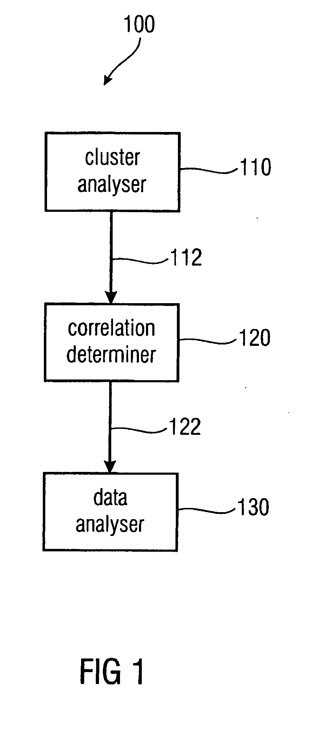

Fig. 1 shows a block diagram of an apparatus 100 for analyzing bulky data according to an embodiment of the invention. The apparatus 100 for analyzing bulky data comprises a cluster analyzer 110, a correlation determiner 120 and a data analyzer 130. The cluster analyzer 110 is connected to the correlation determiner 120 and the correlation determiner 120 is connected to the data analyzer 130. The bulky data comprises a plurality of data items, each data item comprising a data value for each experiment of a plurality of experiments by which the bulky data was obtained. The cluster analyzer 110 determines a cluster center 112 of a cluster of data items based on a cluster analysis of the plurality of data items. Then, the correlation determiner 120 calculates a correlation value 122 between the determined cluster center and each data item of the plurality of data items. The correlation value 122 indicates a correlation strength of the cluster center and a data item. Further, the data analyzer 130 analyzes the bulky data based on calculated correlation values 122.

The bulky data may be obtained by real experiments (e.g. crash-tests) or virtual experiments (e.g. crash-test simulations). This usually results in a huge amount of data to be analyzed. Using the described concept, the bulky data can be analyzed, for example, by analyzing the behavior of only a few cluster centers or data items representing the cluster centers instead of analyzing all data items of the bulky data. Therefore, the analysis of the bulky data may be accelerated significantly. Further, the precision may be increased, because the cluster centers represent the behavior of the data items assigned to the cluster center very accurately. Further, the computational complexity may be reduced, since not every data item must be analyzed individually.

A determined cluster center may be represented by coordinates, by a vector or a data item comprising a similar behavior or the most similar behavior of all data items of the plurality of data items.

In the following, the inventive concept is described in more detail with reference to crash-test analysis, although the inventive concept can more generally be used for various applications from engineering or natural sciences with e.g. geometrical background. Examples include also, but not limited to forming (e.g. for analysis of spring-back or clicker phenomena), casting and molding (e.g. for analysis of blow holes arising in a solidification process), computational fluid dynamics (e.g. for backtracking of eddies or finding and backtracking sources of numerical instabilities, e.g. due to cracks, tiny in- or outflows dominating the overall flow field or due to inadequate local discretization), medicine (e.g. for backtracking of instable results inside soft matter, e.g. organs, due to irradiation processes such as focused ultra-sound), semiconductor process simulation (e.g. for backtracking of mechanical stress peaks to areas with non-matching crystal lattices or for the analysis of doping evolution after deposition or injection due to chemical reactions and diffusion), semiconductor device simulation (e.g. for finding and backtracking of current leaks), network simulation and circuit simulation (if combined with geometrical information; e.g. for backtracking of leaks) or electromagnetic fields, electromagnetic compatibility (e.g. for backtracking of local sensitivities due to wave evolution or the analysis of numerical instabilities).

Therefore, the apparatus for analyzing bulky data may be, depending on the application, for example, a crash-test analyzer, a forming analyzer, a casting analyzer, a molding analyzer, a fluid dynamics analyzer, a medical analyzer, a semiconductor process analyzer, a semiconductor device analyzer, a network analyzer, an electromagnetic field analyzer or an electromagnetic compatibility analyzer.

The experiments may be based on a geometrical model comprising, for example, a lattice with a plurality of lattice points. This lattice points may be defined by their positions in space represented by coordinates of a 3-dimensional coordinate system. In this connection, for example, each coordinate of a lattice point of the geometrical model (e.g. lattice model of a car) may represent a data item.

If simulations are used to obtain the bulky data, a sufficient variation between the experiments may be obtained by varying the assignment of tasks in a parallel processing to the used parallel processors.

A data item of the bulky data may represent a specific parameter to be determined during the experiment. For example, during a crash-test the positions of predefined points on the crash test object (e.g. a car) are recorded. For example, the coordinates $(x, y, z)$ of the center of the steering wheel within a predefined coordinate system are recorded for preceding time intervals during the crash test. In this example, a data item may be one coordinate of the center of the steering wheel ($x$, $y$ or $z$) at a specific timestep (or for a time interval) during the crash test. The crash test is repeated several times representing the plurality of experiments, so that each data item comprises a data value for each experiment. In this way, a data item may also be considered as a vector containing the data values of the experiments.

The cluster analyzer 110 may determine cluster centers 112 indicating regions of high density of data items or representations of data items.

The calculated correlation values 122 indicate a correlation strength of the cluster center 112 and the data items. In this connection, a strong correlation means that the data item behaves or nearly behaves like the cluster center 112 and a weak correlation means that the data item and the cluster center 112 behave independent or nearly independent from each other. In this way, a data item can be assigned to a cluster center 112 comprising the highest correlation strength, if correlation values between the data item and several cluster centers are calculated, for example.

The cluster analyzer 110, the correlation determiner 120 and the data analyzer 130 may be independent hardware units or part of a processor, a microcontroller or a computer as well as a computer program or software product for running on a computer or microcontroller.

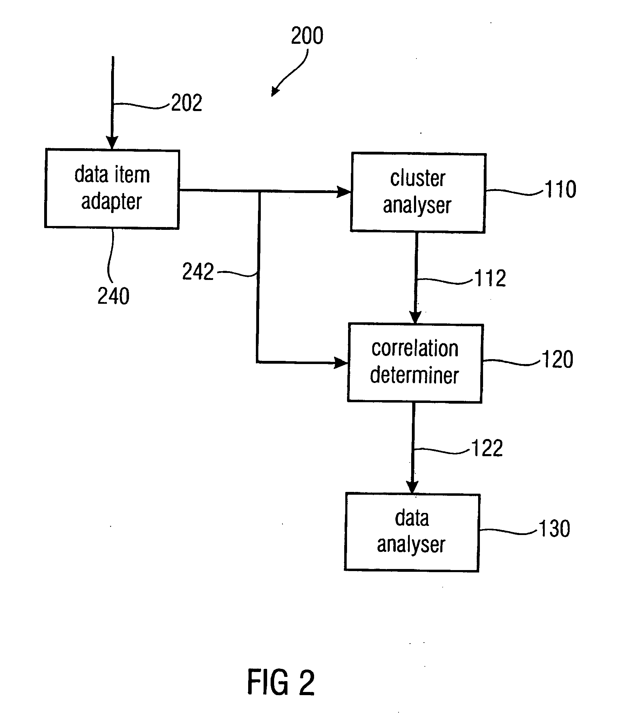

For the cluster analysis and/or the calculation of the correlation value 122, the data items itself may be used as input data or the data items may be preprocessed. For this, the apparatus 100 may comprise additionally a data item adapter. Fig. 2 shows a block diagram of an apparatus 200 for analyzing bulky data according to an embodiment of the invention. The apparatus 200 is similar to the apparatus shown in Fig. 1, but comprises additionally a data item adapter 240 connected to the cluster analyzer 110 and the correlation determiner 120. The data item adapter 240 may preprocess the data items in many different ways. For example, the data item adapter 240 may calculate a deviation vector 242 for a data item 202 by calculating a deviation value for each data value of the data item 202. The deviation value calculated from the data value of the data item 202 may be calculated by calculating the difference between the data value and a mean of all data values of the data item 202. In other words, the data item adapter 240 may adapt the information contained by the data item by replacing it by a deviation vector indicating the deviation of the data values from the mean of all data values of the data item.

Further, the cluster analyzer 110 may calculate a cluster center vector 112 representing the cluster center based on a cluster analysis of the deviation vectors calculated for each data item 202 of the plurality of data items. In other words, the cluster analyzer 110 may determine a representation 112 of the cluster center compatible to the representation 242 of the data items 202. Additionally, the correlation determiner 120 may calculate the correlation value 122 between the determined cluster center vector 112 and the deviation vector 242 of each data item. The deviation vectors may be defined in different ways. One possibility may be the following statistical description.

The input may be an experimental data matrix $x_{ij}$, $i=1..N_{data}$, $j=1..N_{exp}$ (containing the data items $x_i$). Every column in this matrix forms one experiment, every row forms a data item varied in experiments.

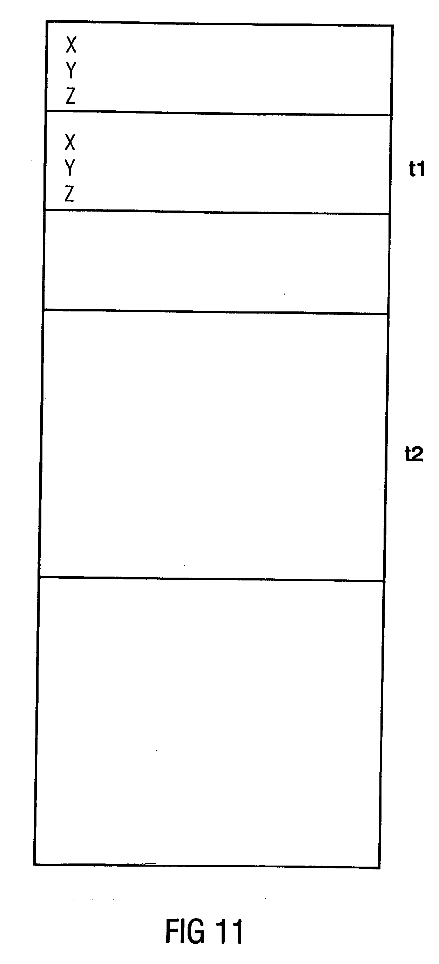

A schematic example for data item matrix is shown in Fig. 11. The three coordinates of a point observed during the experiment (e.g. x,y,z of a point on a car or a car simulation model within a Cartesian coordinate system) are represented by three succeeding rows. Further, the data items are arranged in blocks, each block containing the data items of a timestep (indicated by t1, t2).

Then every data item is transformed to a z-score vector:

$$<x_i> = \textstyle\sum_j x_{ij} / N_{exp}$$

with $dx_{ij} = x_{ij} - <x_i>$ and $|dx_i| = sqrt(\sum_j dx_{ij}^2)$ and $z_{ij} = dx_{ij}/|dx_i|$
or by means of the equivalent alternative formula

$$z_{ij} = dx_{ij} / (rms(x_i)\, sqrt(N_{exp})),$$

with $rms(x_i) = sqrt(\sum_j dx_{ij}^2 / N_{exp})$. Here $<x_i>$ is the mean of the i-th data item, $dx_{ij}$ is the deviation from the mean of the i-th data item, and $rms(x_i)$ is the root mean square deviation of the i-th data item.

In this way data items are transformed to $N_{data}$ vectors in $N_{exp}$-dimensional space. All these z-vectors belong to an ($N_{exp}$ -2)-dimensional unit-norm sphere, formed by intersection of a sphere $|z|=1$ with a hyperplane $\sum_j z_{ij}=0$.

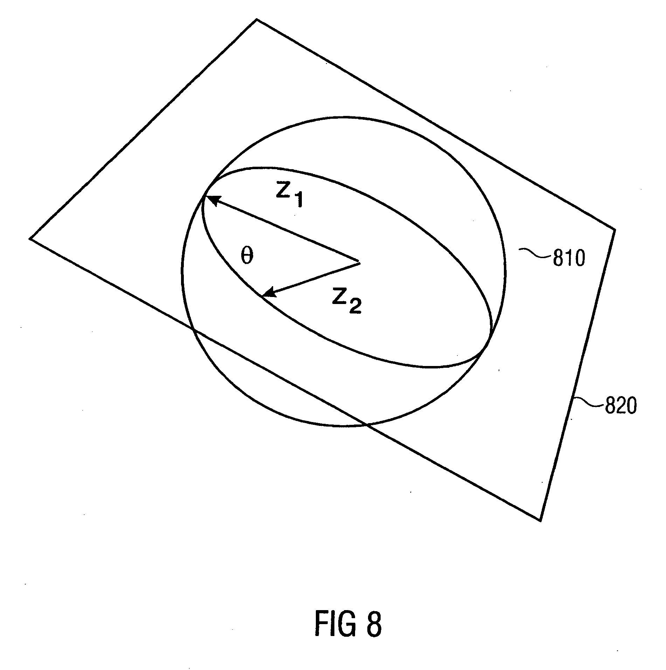

Fig. 8 shows a schematic illustration of two z-vectors z1, z2, within the unit norm sphere 810, formed by an intersection of a sphere 810 with a hyperplane 820.

An important role of this representation is the following. All z-vectors which are located close one to the other correspond to strongly correlated data items. Two such data items being displayed on 2D plot will show a linear dependence between the items. This plot is coincident up to a scaling with the plot of one z-vector versus the other, which is concentrated near $z_1=z_2$ due to approximate coincidence of z-vectors. Also in the case when two z-vectors are approximately opposite, they correspond to strongly correlated data items and linear data plot, approximately coincident with $z_1=-z_2$, up to a scaling.

Alternatively, in definition of z-vector one can use arbitrary $L_p$-norm:

$$z_{ij} = dx_{ij}/\|dx_i\|_p$$

where $\|v\|_p = (\sum_j |v|^p)^{1/p}$ is $L_p$-norm of vector v, in particular, $\|v\|_1 = \sum_j \cdot |v_j|$ or $\|v\|_\infty = max_j |v_j|$. Previously given definition is equivalent to a choice of $L_2$-norm: $\|v\|_2 = sqrt(\sum_j v_j^2)$. So generalized z-vectors will belong not to a sphere but to so called superquadric, which in the particular cases $p=1,\infty$ becomes a regular polyhedron. Also, alternatively to the angular distance between two z-vectors one can use an arbitrary metric, e.g. any monotonically increasing function $f(\theta)$, possessing a property $f(0)=0$.

In other words, in a preferred embodiment, the data item adapter 240 may calculate the deviation vectors of the data items, so that the calculated deviation vectors represent z-score vectors of the data items.

Further, the correlation determiner 120 calculates a correlation value 122 for each data item of the plurality of data items. A correlation value 122 can be determined in many different ways. For example, a correlation value 122 may be calculated so that the absolute value of the calculated correlation value varies between a minimal correlation value indicating a low correlation or no correlation and a maximal correlation value indicating a strong correlation. For this, for example, a Pearson correlator may be used.

For example, the scalar product of two z-vectors is equal to Pearson's correlator since

$$(z_1,z_2) = \textstyle\sum_j z_{1j}\, z_{2j} \quad and \quad (z_1,z_2) = corr(x_1,x_2)$$

It is also related with the angular distance of the z-vectors on the sphere:

$$(z_1, z_2) = \cos \theta \, (z_1, z_2),$$

See for example Fig. 8. Pearson's correlator, often used as a measure of correlation, indicates strong correlation in the limit of corr→1 (maximal correlation value), corresponding to $z_1 \to z_2$, $\theta \to 0$ (minimal correlation value) or in the limit corr→1, corresponding to $z_1 \to -z_2$, $\theta \to \pi$. The sign of Pearson's correlator shows the direction of dependence of data items: in the case corr=1, $z_1$ increases with increase of $z_2$, in the case corr=-1, $z_1$ decreases with increase of $z_2$. If not the direction of dependence is of interest, but only the fact of such dependence, one can formally consider a sphere of z-vectors as projective space, where opposite points are glued together and are considered as identical points. In this space approximately opposite vectors become approximately coincident.

In other words, the correlation determiner 120 may calculate the correlation value 122 for each data item of the plurality of data items, so that a correlation value 122 calculated for a first deviation vector (e.g. z-score vector) of a data item is equal to a correlation value 122 calculated for a second deviation vector (e.g. z-score vector) comprising an opposite direction in comparison to the first deviation vector.

Further, the cluster analysis may be done in many different ways. Although a correlation-independent cluster analysis may be used, in preferred embodiments of the invention, the cluster analysis considers a correlation of the data items. In this connection, the cluster analysis may also be called correlation clustering or correlation cluster analysis.

The task of correlation clustering is to group all strongly correlated data items in one cluster and subdivide all data items to a few such clusters. This allows to identify the parts of data which behave similarly and to reduce the number of independent degrees of freedom of the system to few cluster centers. Clustering provides a compact representation of experimental data, suitable for direct analysis by user. Formally this representation can be defined as a reconstruction of original bulky data in terms of cluster centers and association of all data with these centers. Reconstruction proceeds in two phases, wherein phase I is determination of cluster centers and phase II is assignment of data items to cluster centers.

For example, correlation clustering becomes straightforward in z-space representation. One only needs to group together closely located z-vectors with any suitable general clustering technique. Many efficient clustering techniques are known to be applicable to this problem, as for example, density-based clustering, k-means clustering, dendrogram clustering or spectral clustering.

Details of these techniques will be presented below. Most of them possess as a control parameter a cluster diameter diam related to Pearson's correlator by the formula

$$\text{diam} = \arccos(\text{corr}).$$

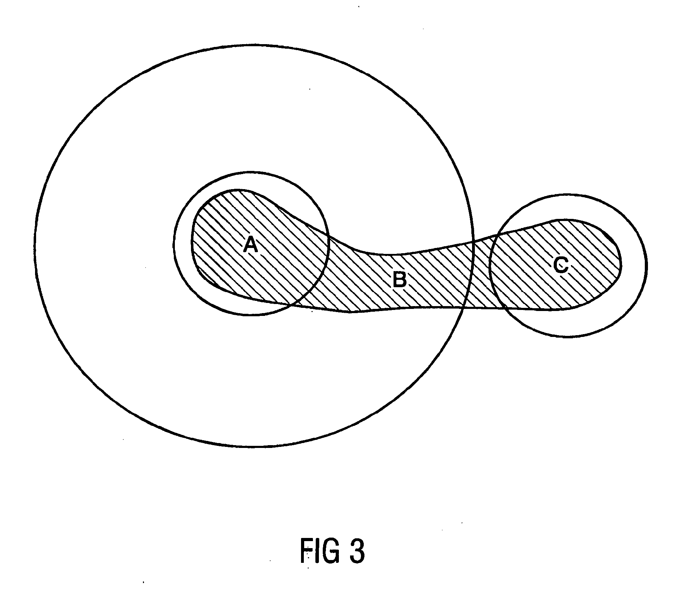

The density-based clustering technique estimates the density of data items in z-space by introducing a discretization of z-space to a finite set of hypercubes. The hypercubes should cover the unit-norm sphere where all data items are located. The hypercube size should correspond to the optimal cluster diameter diam=arccos(corr). In every hypercube, matching z-score vectors are counted. Although the total number of hypercubes is huge due to the large dimension of z-space - this phenomenon is referred as "curse of dimensionality" -, only a small portion of hypercubes is filled. Practically, the number of filled hypercubes is much less than the number of data items. For efficient access to so structured data, one can use known methods of multidimensional indexing, based on binary search trees. Such methods support rapid search, insert and erase operations, with a typical operation count of $O(\log(N_{elements}))$. An implementation of the methods can be found in standard software libraries such as C++ standard template library STL. After processing all data items and storing hypercube count data in a binary tree, the following procedure is applied, see Fig. 3. An hypercube A with a maximal count is selected, and its center is defined as the cluster center. Then all hypercubes B are removed possessing a correlation with A stronger than a specified weak limit (e.g. those with |corr|>0.5). The procedure is repeated for the remaining hypercubes C until the maximal count becomes small. Density-based clustering requires $O(N_{cubes})$ memory and between $O(N_{data} * N_{exp})$ and $O(N_{data} * \log(N_{cubes}))$ floating point operations, where in practice $N_{cubes} \ll N_{data}$.

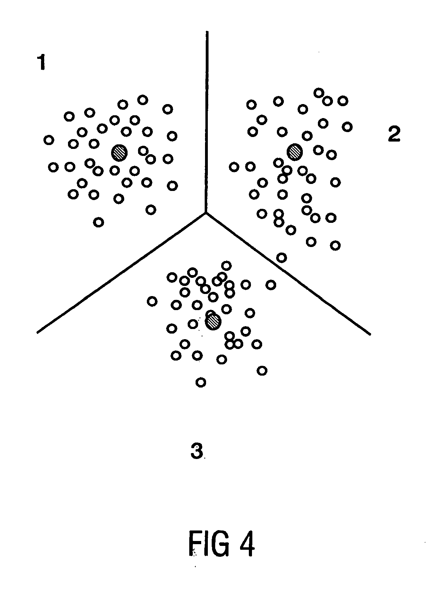

The k-means clustering technique, also known as Voronoj iteration, is illustrated by Fig. 4. Its initialization requires specifying the expected number of clusters k and randomly selecting k cluster centers. Then each data item is assigned to the nearest cluster center, and new cluster centers are recomputed. This step is repeated iteratively until the cluster assignments do not change any more. This technique allows to obtain a minimal average cluster diameter, which therefore becomes a function of number of clusters k: <diam>(k). The optimal value of k corresponds to <diam>(k*)=arccos(corr). This can be achieved by initially selecting a small value of k (underestimation, e.g. k=5) and sequentially incrementing k until optimal condition is met. Otherwise one can select a large value for k (overestimation, e.g. k=1000) and decrement k to the optimal value. k-means has moderate requirements w.r.t. memory $O(N_{data} * N_{exp})$, and computational complexity $O(N_{data} * N_{exp} * k * N_{iter})$, depending on the number of iterations.

The dendrogram clustering technique, also known as agglomerative hierarchical clustering, stores a distance matrix for clusters d(X,Y). For the case of correlation clustering it can be related with correlation matrix, defined in terms of scalar products of corresponding z-vectors, e.g.

$$d(x,y) \;=\; \arccos |corr(x,y)| \;=\; \arccos |(z_x, z_y)|.$$

So-defined distance between data items is then used to determine distance between clusters, by means of one of these alternative definitions:

$$\text{single linkage:} \qquad d(X,Y) = \min d(x,y), \qquad x \in X,\ y \in Y,$$
$$\text{complete linkage:} \qquad d(X,Y) = \max d(x,y), \qquad x \in X,\ y \in Y,$$
$$\text{average linkage:} \qquad d(X,Y) = \operatorname{avg} d(x,y), \qquad x \in X,\ y \in Y.$$

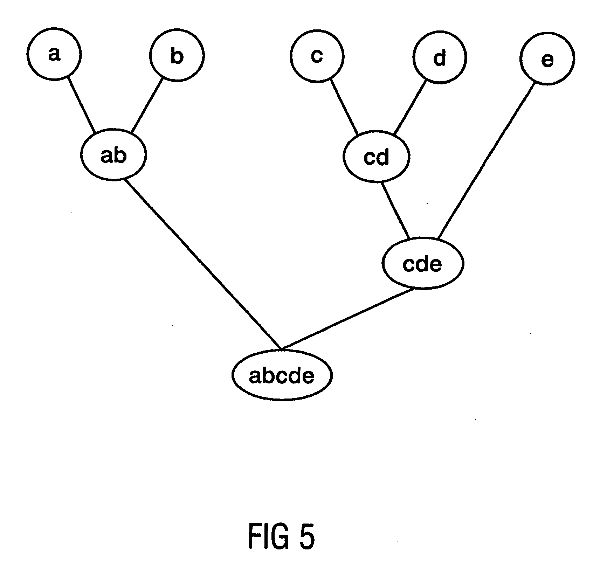

The method defines original points as initial clusters, then applies to them the following procedure. A pair of clusters is found possessing minimal distance. This pair is merged to a new cluster, and the distance matrix is updated accordingly (merging two rows corresponding to clusters X and Y to a new row using the linkage formula above, complementing merge of X and Y columns from matrix symmetry). The procedure is repeated until all data will be merged into one cluster, or a stopping criterion will be met. For example, if the minimal distance exceeds the critical diameter diam=arccos(corr), iterations can be stopped. A sequence of merged clusters defined by this procedure can be graphically displayed as a tree-like diagram, called dendrogram, see Fig. 5. A stopping criterion cuts off a tree not reaching the root, leaving a number of clusters with user-controlled diameter. Dendrogram clustering is memory- and computationally expensive, since it requires to store a $O(N_{data}{}^2)$ distance matrix and to perform up to $O(N_{data}{}^3)$ operations for processing. For bulky data, it can be applied only in a combination with a special subsampling procedure, as described below. On the other hand, this technique is non-iterative and has a predictable completion time.

Spectral clustering is based on a special matrix decomposition, known as singular value decomposition (SVD). The Z-matrix is a row-wise collection of z-vectors for all data items and is decomposed as follows:

$$Z = U \Lambda V^T$$

where A is a diagonal matrix of size $N_{exp} * N_{exp}$, U is a column-orthogonal matrix of size $N_{data} * N_{exp}$, V an orthogonal square matrix of size $N_{exp} * N_{exp}$:

$$U^T U = 1, \quad V^T V = V V^T = 1.$$

A computationally efficient method to perform this decomposition in our practical case with $N_{data} \gg N_{exp}$ is to find the Gram matrix:

$$G = Z^T Z \;,$$

perform its spectral decomposition:

$$G = V \Lambda^2 V^T \;,$$

and compute the remaining U-matrix with the formula:

$$U = Z V \Lambda^{-1}.$$

The Gram matrix has a moderate size of $N_{exp} * N_{exp}$ which allows to load the whole G-matrix to memory and apply any suitable method for spectral matrix decomposition (e.g. Jacobi method). Practically, the computational complexity of this step is negligible compared with the other steps. Computation of G-matrix consists of sequential reading of data items and incrementing the elements of G-matrix, e.g. for n-th data item (n=1.. $N_{data}$):

$$G_{ij} = G_{ij} + z_{ni} z_{nj}, \quad i,j=1.. N_{exp},$$

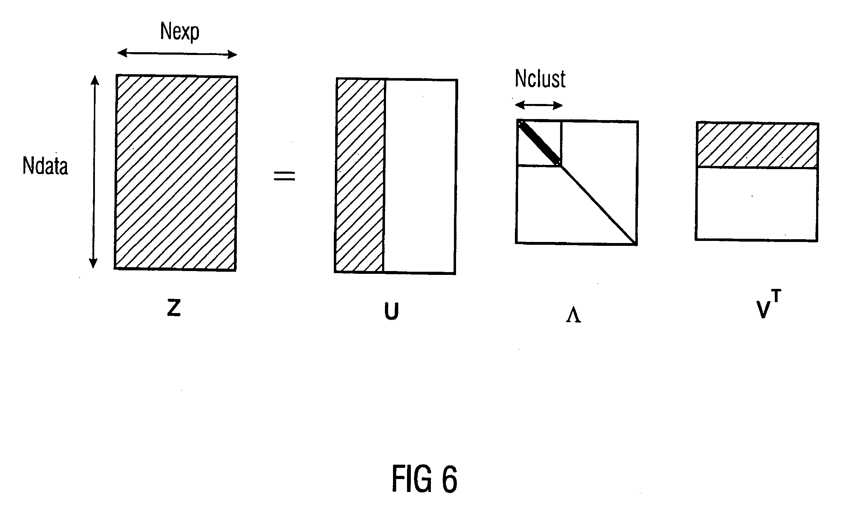

requiring $O(N_{data} * N_{exp}^2)$ floating point operations and $O(N_{exp}^2)$ amount of memory. Computation of U-matrix requires to read the database once more, performing $O(N_{data} * N_{exp} * N_{clust})$ floating point operations and storing $O(N_{exp}^2)$ data items. Further optimizations are possible, based on symmetry of G-matrix, storage of only $N_{exp} * N_{clust}$ piece of V-matrix etc. Here, $N_{clust}$ is the number of selected spectral clusters, practically $N_{clust} << N_{exp}$, see Fig. 6.

Selection of clusters can be performed using Parseval's criterion. The SVD spectrum of the Z-matrix is represented by elements of the diagonal matrix A. These values are non-negative and sorted in non-ascending order. If all these values starting from a certain number $N_{clust}$ +1 are omitted (i.e. set to zero), the resulting reconstruction of Z-matrix will have a deviation dZ. $L_2$-norm of this deviation gives

$$err^2 = \Sigma_{ij} dz_{ij}^2 = \Sigma_{k>Nclust} \Lambda_k^2$$

i.e. the sum of squares of omitted spectral values. This formula allows controlling precision of reconstructed Z-matrix. Usually $\Lambda_k$ rapidly decreases with k, and a few first A values give sufficient precision.

In this way, spectral clustering provides an efficient representation of the Z-matrix as a linear combination of a small number of U-vectors. It is convenient to scale these vectors by entries of the diagonal A-matrix, writing $\Psi$=U$\Lambda$. Column vectors of $\Psi$ are called spectral clusters or modes, while column vectors of the V-matrix define corresponding cluster centers in z-space.

In a separable case, when all data items can be assigned to $N_{clust}$ exactly uncorrelated clusters, the cluster centers in z-space, found by any other clustering method, become mutually orthogonal (since scalar product is equal to correlator) and identical with columns of V-matrix. U-vectors in this case will have non-overlapping content, taking non-zero values on data items from corresponding cluster and zero values outside.

Generally, there can be data items weakly correlated with several cluster centers. In this case, U-vectors will overlap, reflecting the fact that data items belong simultaneously to several clusters. Also, cluster centers can be weakly correlated with one another and can be approximately, but not exactly orthogonal. In this case, V-vectors will represent an orthogonal basis in z-space nearest to cluster centers, in this way approximating positions of actual cluster centers. The reconstruction of the Z-matrix provided by spectral clustering remains exact also in this general case and can be used e.g. for interpolation of bulky data (see below).

The formulae above implement spectral clustering for the Z-matrix. This is mathematically equivalent to a spectral decomposition of the correlation matrix

$$C=ZZ^T=U\Lambda^2U^T$$

Here, the matrix C has size $N_{data} * N_{data}$ and is composed of scalar products of z-score vectors for every pair of data items (equal to correlator of data items). Due to a huge size of this matrix, it is practically impossible to compute, store or spectrally decompose it directly. However, the above method provides its correct and computationally efficient spectral decomposition. One can use in the above formulae instead of the Z-matrix the dX-matrix, composed of dx-vectors (see above). The resulting decomposition will be equivalent to spectral decomposition of the covariance matrix

$$C_2= (dX) (dX)^T,$$

which has the same size $N_{data} * N_{data}$ and is composed of average values $cov_{ij}=<dx_i \, dx_j>$ (with a normalization factor $N_{exp}$). The matrices C and $C_2$ differ only in scaling factors, equal to scatter rms($x_i$), applied to every row and column. Generally, one can assign an arbitrary weight per data item, e.g. for the purpose of selecting more interesting regions of data and compute SVD for matrix QZ, where Q is a diagonal matrix containing these weights. This is equivalent to the spectral decomposition of the matrix

$$C_q = QZZ^TQ.$$

The results of spectral clustering for different selections of weights are equivalent up to orthogonal transformation, i.e. after a variation of weights, $\Xi = Q^{-1}UA$ is replaced by $\Xi \rightarrow \Xi\Omega$, with $\Omega$ being a $N_{exp} * N_{exp}$ orthogonal matrix:

$$\Omega\Omega^T = \Omega^T\Omega = 1.$$

In the separable case described above, the matrices C, $C_2$, Cq have block-diagonal structure and their decompositions become independent on weights ($\Omega=1$).

A problem which can occur in application of clustering techniques is appearance of chains of data items where consequential items are strongly correlated but beginning and end items are not correlated. Such chains should not be merged in one cluster. Density-based clustering includes a special algorithm for elimination of strongly correlated chain members. The k-means technique attempts to minimize the average cluster diameter and will tend to break the chains and assign them to different cluster centers. The dendrogram technique is free from the chaining phenomenon if the complete linkage scheme is used. Spectral clustering produces cluster centers which are orthogonal and uncorrelated by definition.

It has been already noted that only the absolute value of the correlator is important, and opposite z-vectors can be identified by means of gluing the z-sphere to ($N_{exp}$ -2)-dimensional projective space. The density-based technique can be modified to count opposite z-vectors in the same hypercube applying a transformation z' = {z,$z_1 \geq 0$; -z,$z_1 < 0$} and covering only half of the sphere by hypercubes. k-means can be similarly modified by redefinition of the assignment criterion: a z-vector is assigned to cluster center $z_c$ if the absolute value $|(z,z_c)|$ is maximal, and a z-vector is reverted $z \rightarrow -z$ if $(z,z_c) < 0$. The dendrogram technique takes the structure of the projective space automatically into account by a special definition of the non-Euclidean distance, so that opposite z-vectors produce a zero entry in the distance matrix. Spectral clustering merges opposite cluster centers in one cluster, assigning them to one V-vector.

Summarizing, the cluster analyzer 110 may determine at least one cluster center 112 (e.g. represented by a cluster center vector) based on a density-based cluster analysis, a k-means cluster analysis, a dendrogram cluster analysis, a spectral cluster analysis or another clustering technique. In this connection, the cluster analyzer 110 determines cluster centers 112 of clusters of data items comprising strongly correlated data items. This means that the cluster analysis identifies clusters of strongly correlated data items. Strongly correlated means in this connection that these data items are correlated stronger to each other or the corresponding cluster center 112 than to the other determined cluster centers of data items.

Further, the symmetry of the projected space may be exploited. For this, the cluster analyzer 110 may map deviation vectors (e.g. z-score vectors) representing data items comprising opposite directions to the same cluster center. Depending on the bulky data, the cluster analyzer 110 may determine one or more cluster centers of data items based on the cluster analysis of the plurality of data items. Consequently, the correlation determiner 120 may calculate a correlation value 122 between each determined cluster center 112 and each data item of the plurality of data items. In this way, for each data item of the plurality of data items a cluster center comprising the strongest correlation to the data item may be identified and the data item can be assigned to this cluster center.

The clustering methods mentioned above may require different run times depending on the input bulky data and other parameters of the cluster techniques. Some of the clustering methods can be accelerated by simple adaptations.

Spectral clustering allows to process data items sequentially one after the other and has the minimal memory requirements. On the other hand, it requires considerable computational effort for filling the Gram matrix.

If the cluster analyzer 110 determines the plurality of cluster centers based on a spectral cluster analysis, the number of cluster centers of the plurality of cluster centers determined by the cluster analyzer 110 may depend on or may be set by Parseval's criterion.

Density based clustering also allows to process data items sequentially, since it stores only density information per hypercube. Its problem, however, is a rapidly increasing number of hypercubes and proportional memory requirements. Practically there are only a few hypercubes with millions of data items, and millions of hypercubes contain only a few data items. Only the most populated hypercubes are interesting for the analysis. The following intermediate "cleaning procedure" can reduce the memory usage. During the filling of hypercubes, periodically, e.g. after every million data items and $N_1 = 100$ times totally, hypercubes which have too few data items, e.g. less than $N_2 = 100$, are removed. As a result, only a few really populated hypercubes survive the procedure. The amount of data per hypercube can be underestimated by $N_1 * N_2 = 10000$ which is much less than the amount of data items in the hypercube (a million). This procedure, similar to the percentage hurdle voting rule, allows a significant reduction of the total memory usage of the algorithm.

In other words, for example, if the cluster analyzer determines the plurality of cluster centers based on a density-based cluster analysis, the plurality of cluster centers determined by a cluster analyzer 110 may contain only cluster centers comprising more than a predefined minimum number of assigned data items after considering a predefined number of data items of the plurality of data items. Cluster center containing less than the minimal number of assigned data items after considering the predefined number of data items may be neglected or deleted. The predefined number of data items of the plurality of data items may be small compared to the number of data items of the plurality of data items or the number data items of the bulky data (e.g. 1/10, 1/100, 1/1000 or less).

Other clustering methods require processing simultaneously all data items and, for optimal performance, need to load in memory the whole data matrix or even the larger distance matrix. Due to their enormous sizes this is practically impossible. The following observation allows applying these methods nevertheless. Since the most interesting clusters contain millions of data items, their centers and the actual density of data in them can be reliably determined on much smaller statistics than the full set. Subsampling of data items is a selection of random subset in the full set of data items, which can be used for determination of cluster centers. The selection should be really random and not correlated with node, part or state structure of the dataset. After determining the cluster centers, the full set of data items is processed once to assign them to the clusters. This approach is similar to a public opinion poll by selecting a representative sample of the population. It allows reducing the memory usage and accelerating computation significantly (by a factor of thousands).

More generally, the bulky data may comprise more data items than the plurality of data items and a pre-selection of data items may be done to obtain the plurality of data items. For this, the apparatus for analyzing the bulky data may comprise a data item selector. The data item selector may select the data items of the plurality of data items randomly or pseudo-randomly from the data items contained by the bulky data. In the embodiment shown in Fig. 2, the data item selector may be located between the data item adapter 240 and the cluster analyzer 110 or before the data item adapter 240.

In this connection, the correlation determiner 120 may calculate a correlation value 122 not only for the plurality of the data items, but also for the other data items contained by the bulky data. In other words, the correlation determiner 120 may calculate a correlation value between the determined cluster center and each data item of the bulky data.

In the described example, correlation clustering delivers cluster centers in form of z-vectors. In addition to cluster centers, the user can define other points of interest involving her/his engineers knowledge of the problem. For example, certain control points on the car body can be important from safety requirements and should be included into the points of interest list.

Consequently, the correlation determiner 120 may calculate a correlation value between each item on the list of points of interest and each data item of the plurality of data items. The list of points of interest may comprise the determined cluster centers 112 and at least one user-defined point of interest.

After the POI list (list of points of interest) has been set up, the main pass of the computation is applied. For example, it computes correlator corr(POI,*) of all items from the POI list with all data items, as well as scatter amplitude rms(*) for all data items. This step involves one-time reading of all data and is normally one of the most time consuming parts of the analysis.

In the following, an example for a data organization for the main pass is described. The data items are stored in uncompressed or compressed form with a random access to blocks of data (e.g. states). Experiments can be stored in a few separate files (e.g. $N_{exp}$ =25), which may be opened simultaneously. This structure supports an optimal order of data reading, which allows rapid sampling of one data item, i.e. $x_{ij}$, at i fixed, j varied from 1 to $N_{exp}$. This vector is transformed to the z-space, where a few of computations are performed to find rms, corr and other necessary statistical measures of the data item. The resulting measures are written blockwise to a file, if necessary, in compressed form. For example, the data can be written in the data format of the original experiments, ready for visualization with any suitable post-processor program.

To achieve a more compact storage and comprehensive visualization, for tensor structures, such as 3-vectors and 3x3 matrices, an effective norm can be selected and written to a file as a scalar value. For example, scatter of vector values has three components, and its Euclidean norm appear to be most convenient:

$$s_i = \mathrm{sqrt}(\Sigma_{k=1,2,3}\, \mathrm{rms}(x_{3i+k})^2),$$

For the correlator, the maximal absolute value appears more convenient

$$\mathrm{corr}_{ij} = \max_{k1,k2=1,2,3} |\mathrm{corr}_{3i+k1,3j+k2}|,$$

since $|\mathrm{corr}_{ij}| \to 1$ implies that at least one of the tensor components represents strong correlation. In the formulae above, data items are ordered by triples: $(X_1,Y_1,Z_1,X_2,Y_2,Z_2,...)$, see Fig. 11. On this figure highest hierarchical levels are timesteps t1,t2,..., each of them contains nodes, represented by triples of coordinates.

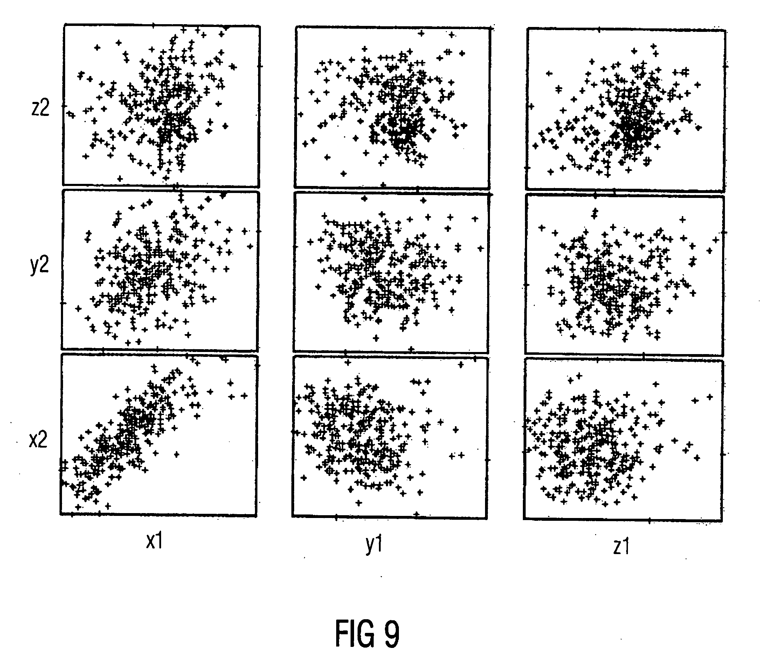

The lost component information can be recovered afterwards by observing raw data plots for any pair of selected nodes. For example, for a destination point from the POI list and for a corresponding source point found in causal analysis, raw data can be extracted from the data set and displayed as 3x3 plots including all component combinations, see Fig. 9. The data items x1, y1, z1 indicating a position in space of a point of interest in a 3-dimensional coordinate system and data items x2, y2, z2 indicating a position in space of a source point found in causal analysis. The data items of the point of interest are compared with each data item of the source point resulting in one of the nine plots shown in Fig. 9. Each plot comprises for each experiment of the plurality of experiments one data point indicating the relationship between the position of the point of interest and the position of the source point. Alternatively, for example, instead of the absolute position of the points, also differences of the positions in comparison to positions of preceding timesteps may be considered. Random access to data items allows to accelerate such data extraction. It accelerates also clustering algorithms, utilizing a subsampling procedure, since only a small selected subset of data must be read. Also, extraction of user-defined POI for computation of correlator is accelerated. Cluster centers which are formally added to the POI list are already presented as z-score vectors and do not need to be extracted. Other parts of computation require only sequential data access.

Summarizing, the effort for processing each of the clustering techniques mentioned includes, in addition to purely computational effort, also input/output operations. For determination of cluster centers one needs $O(N_{subsamp} * N_{exp})$ reading operations, if subsampling is applied, else $O(N_{data} * N_{exp})$ reading operations without subsampling. For output of clustering data one needs $O(N_{data} * N_{exp})$ operations for one-pass reading of the whole database and $O(N_{data} * N_{clust})$ operations to write the clustering results. All input/output operations can be accelerated using data compression algorithms.

In some embodiments according to the invention, the data analyzer 130 may generate a partition diagram based on calculated correlation values to present the results of the analysis of the bulky data.

A partition diagram is a subdivision of a geometrical model to regions of influence: each data item from the geometrical model is checked against user-specified and/or cluster POI lists to find closest POI in the sense of correlation distance dist=arccos(|corr|). A single scalar value may be stored per state and node, the integer part of which is a number of the closest POI and the fractional part of which is related with the correlator to this POI:

$$val = numPOI + (1-|corr|)$$

For example, val=3.2 means that a given point has strongest correlation with the third POI at the level corr=0.8, while val=3.7 means that strongest correlation is still achieved for the third POI, although the correlation level is weak, corr=0.3.

Representation of data in a form of partition diagram shows - at a glance - the correlation structure of the whole data set. Selecting an appropriate visualization range in available postprocessing tools such as GNS Animator, one can investigate further details e.g. search a time step where the region of influence for a particular POI originates, in order to identify the source of scatter related with this POI.

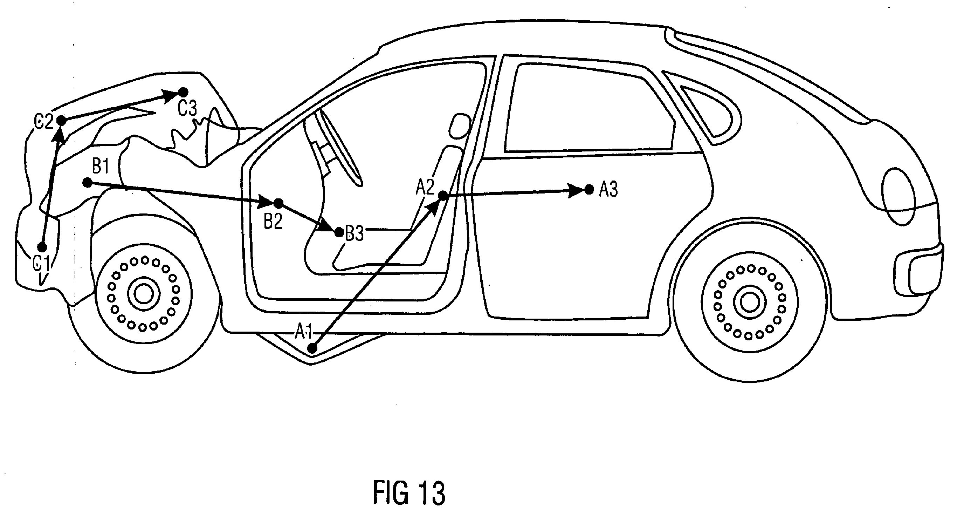

For example, Fig. 13 shows a partition diagram of a real life example. The partition diagram, depicted on Fig. 13, shows at a glance distribution of correlators in the model. Several correlation clusters have been detected, in particular:

Cluster A1-A2-A3 corresponds to buckling of bottom longitudinal structure, whose influence propagates through the driver's seat and extends to the whole left-rear side of the car.

Cluster B1-B2-B3 starts on left wheel house and propagates through the steering column to the right side of the car.

Cluster C1-C2-C3 starts on the bumper at the moment of crash with the barrier and extends over the motor hood.

For example, color (or grey code) may be used to distinguish clusters on the model.

Some embodiments according to the invention relate to a data analyzer 130 performing a scatter analysis, a causal analysis, a linear sensitivity analysis, a non-linear sensitivity analysis or a metamodeling of the bulky data based on calculated correlation values.

In this connection, the data analyzer 130 may perform the cluster analysis based on some or all calculated correlation values. For example, only one or some cluster centers may be analysed and therefore only the corresponding calculated correlation values may be considered.

In some embodiments, the data analyzer may perform a causal analysis or scatter analysis, the causal analysis or the scatter analysis of the bulky data may be based on calculated correlation values aiming to identify causal chains processing a large correlation.

A practical problem of causal analysis in crash-test simulations is often not a removal of a prime cause of scatter, which is usually the crash event itself. It is more an observation of propagation paths of the scatter, with a purpose to prevent this propagation, by finding regions where scatter is amplified (e.g. break of a welding point, pillar buckling, slipping of two contact surfaces etc). Therefore it is necessary to check an amplitude of scatter $rms(x)$ along the causal chain. Also, small cause can have large effect and formally earliest events in the causal chain can have a microscopic amplitude ("butterfly effect"). Again, it is reasonable to search for amplifying factors and try to eliminate them, not the microscopic sources.

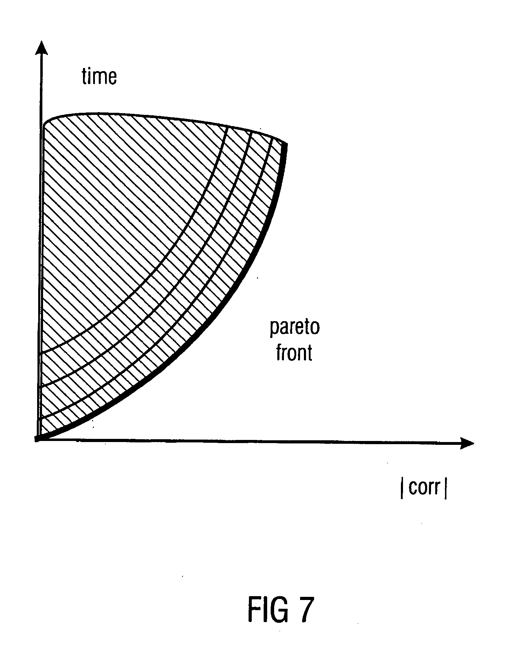

Causal chains can be defined as regions in space-time possessing a large correlator (e.g. $|corr|>0.7$) with a given destination point. Such regions can be directly visualized using computed correlation data. A selection of the best representative path inside the chain can be done using 2-dimensional multi-objective optimization for finding parts with maximal correlation at earliest possible state. This gives a curve (Pareto front) on a 2-dimensional plot (time,$|corr|$) representing the causal chain, see Fig. 7. One can also add to the representative set a neighborhood of the Pareto front, which can be determined with Pareto ranking methods.

In other words, the data analyzer 130 may reconstruct a causal chain based on a Pareto ranking of correlation values.

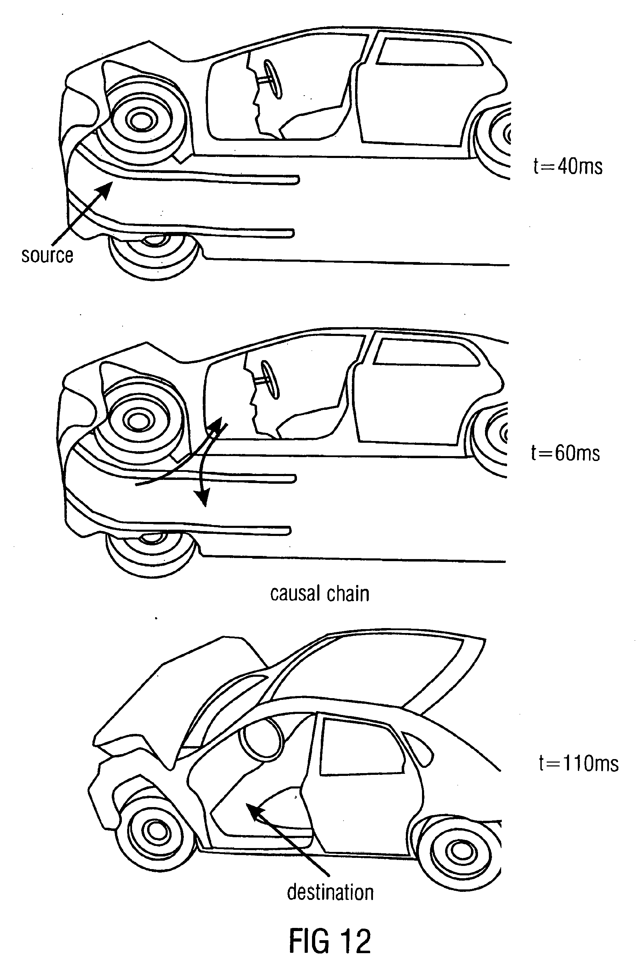

An illustration of a causal analysis is shown in Fig. 12. In this example the crash model of the car comprising 1 million nodes, 32 timesteps and 25 simulations (experiments) is illustrated.

Crash intrusions in foot room of the driver and passenger are commonly considered as critical safety characteristics of car design. These characteristics possess numerical uncertainties, whose analysis falls in the subject of this patent. For user specified destination point, selected in driver's foot room, depicted on Fig. 12 bottom, correlators have been computed using the method described in this patent. Color (grey code) displays the value of correlator. A source of the scatter has been identified at earlier time step by increased value of correlator. The source is related with a buckling of longitudinal structure depicted on Fig. 12 top. The values of large correlator propagate along the causal chain depicted on Fig. 12 middle. This chain, detected with Pareto front algorithm, shows propagation of the scatter from the source towards steering wheel, and further to the foot room destination point.

Alternatively or additionally to the scatter analysis or causal analysis, the data analyzer 130 may perform a linear sensitivity analysis of the bulky data.

Sensitivity analysis considers dependence of the numerical result on variation of control parameters $par_k$, $k=1...Npar$. In crash problems such control parameters can be e.g. thicknesses of car body components, initial velocity of collision, material properties etc. The purpose of linear sensitivity analysis is, based on the determination of a Jacobi matrix $J_{ik}=\partial x_i/\partial par_k$ or, in a different normalization, a sensitivity matrix $S_{ik}=J_{ik}rms(par_k)$, a decision which parameters mostly influence the data. Our correlation data allow solving rapidly also this task. Particularly, in case of a uniform design of experiment (DoE) with a random and uncorrelated change of parameters, we have

$$S_{ik} = rms(x_i)\ corr(x_i,par_k)$$

i.e. the sensitivity matrix is proportional to the correlator of data item with variation of parameter. To compute these data, one only needs to include data items representing the variation of parameters to the list of POI, in addition to cluster centers and user-defined POIs. However, in case of many parameters, the resulting sensitivity matrix is too bulky for direct representation to the user. It is better to compute the sensitivity matrix only for cluster centers, since they represent main tendencies in data:

$$S_{pk} = rms(clust_p)\ corr(clust_p,par_k)$$

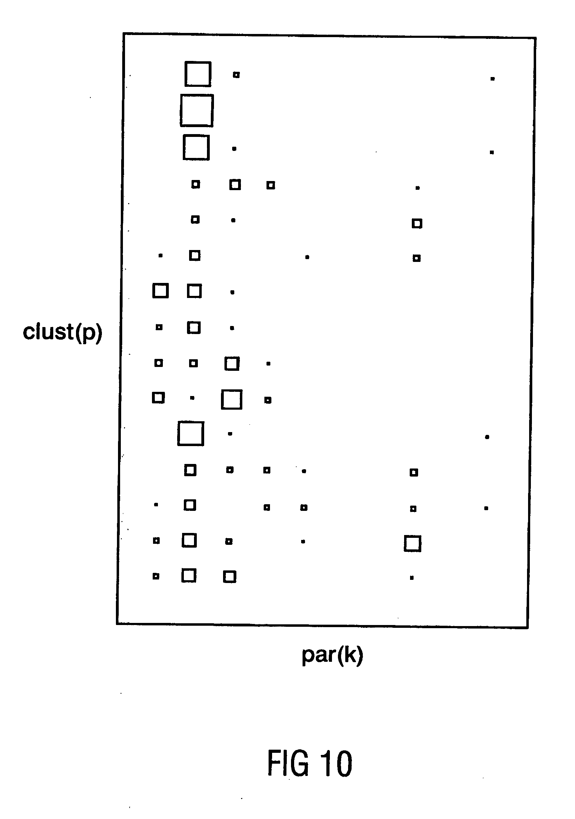

This gives a comprehensible matrix of size $N_{clust} \times N_{par}$, the entries of which can be directly visualized to detect most influencing parameters, see Fig. 10. The sizes of squares represent values of matrix elements. Further, color can be used to display sign of the dependents.

A similar formula can be obtained also for a non-uniform DoE and a correlated change of parameters:

$$S_{pk} = rms(clust_p)\ \Sigma_{m=1..Npar}\ corr(clust_p,par_m)\ C^{-1}_{mk},$$

where $C_{mk}=corr(par_m,par_k)$ is the inter-correlation of parameters.

For performing the linear sensitivity analysis, the correlation determiner 120 may add a data item representing a variation of a control parameter of the experiments and calculate the correlation value between the added data item and each data item of the plurality of data items. Alternatively or additionally, the correlation determiner 120 may calculate a correlation value between the added data item and each determined cluster center. Further, the data analyzer 130 may determine a sensitivity matrix or a sensitivity vector based on the determined correlation values of the added data item and may perform the linear sensitivity analysis based on the determined sensitivity matrix or sensitivity vector.

Further, alternatively or additionally, the data analyzer 130 may perform a non-linear sensitivity analysis or a metamodeling of the bulky data.

Metamodeling is an interpolation or approximation method applied to existing simulations to predict the result of a new simulation performed at intermediate values of parameters. Often non-linear methods are used to catch non-linear parametric dependencies. The usage of radial basis functions (RBFs) is quite convenient, i.e. a representation of the form

$$f(par) = \Sigma_{i=1..Nexp}\, c_i\, \Phi\, (|par-par_i|)$$

is used, where $par_i$ are coordinates of the i-th run in the space of design variables; f is the objective value, interpolated to a new point par; $\Phi()$ are special functions, depending only on the Euclidean distance between the points par and $par_i$. The coefficients $c_i$ can be obtained by solving a linear system

$$f_i = \Sigma_j\, c_j\, \Phi\, (|par_i - par_j|)\, ,$$

where $f_i$ are the user-provided data, which could be single criteria or bulky simulation results, associated with i-th simulation run. The solution can be found by direct inversion of the moderately sized $N_{exp} * N_{exp}$ system matrix $\Phi_{ij} = \Phi\,(|par_i - par_j|)$. The result can be written in a form of weighted sum:

$$f(par) = \Sigma_i\, w_i(par)\, f_i,$$

with the weights $w_i(par) = \Sigma_j\, \Phi^{-1}_{ij}\, \Phi\,(|par-par_j|)$. This representation makes an interpolation of bulky simulation data possible at a rate (computational complexity) linear with respect to the size of the dataset.

A suitable choice for the RBF is the multi-quadric function (see for example "Buhmann N.D., Radial basis functions: theory and implementations, Cambridge University Press, 2003")

$$\Phi\, (r) = sqrt(c^2 + r^2),$$

where c is a constant defining smoothness of the function near data point $par = par_i$. In between data points, the result of the interpolation is a cumulative effect of many contributions and, except of this smoothness, there is almost no influence of coefficient c to the result. Therefore no adjustment procedures (learning) is necessary, in contrast to other interpolation techniques like Kriging and neural networks. RBF interpolation can also be combined with polynomial detrending, adding a polynomial part P:

$$f(par) = \Sigma_{i=1..Nexp}\, c_i\, \Phi\, (|par-par_i|) + P(par).$$

This allows reconstructing exactly polynomial (including linear) dependencies and generally improving precision of interpolation. Formulae for coefficients $c_i$ and interpolation weights $w_i$ can be updated accordingly.

Metamodeling is employed to complete sensitivity analysis for non-linear dependencies, where instead of the $S_{pk}$ matrix other quantities can be used as sensitivity measures. For example

$$S^{max}_{pk} = max_{par\, k}\, |S_{pk}|(par_k),$$

with the maximum taken over the k-th central cross-section in parameter space:

$$par_j = (par_j^{min} + par_j^{max})/2, \; j \neq k, \; par_k \in [par_k^{min}, par_k^{max}].$$

Also the sign of $S_{pk}$ can be tested along the cross section, and the global sign of the dependence can be introduced, equal to +1 if all $S_{pk}$ are positive on cross-section, -1 if all $S_{pk}$ are negative and 0 for sign changing $S_{pk}$. This information can be easily presented graphically, e.g. in the form shown on Fig. 10.

Possible interaction terms can be estimated similarly using higher order derivatives.

Metamodeling is also used for the solution of optimization problems. In practical applications, engineers are confronted with simultaneous optimization of multiple objectives, coming from different types of simulations (so called multidisciplinary optimization problems). It is often desirable to interpolate the whole model (even on highly resolved geometries), instead ofsome scalar optimization criteria only, in order to have a possibility to inspect the (Pareto-) optimal design in full detail. Such kind of bulky data metamodeling can be significantly accelerated using correlation clustering described in this patent.

This possibility is based on the fact that, for bulky crash data, the (approximate) rank of the data matrix is usually much smaller than the number of experiments, rank« $N_{exp}$. The rank of a matrix is the maximal number of linearly independent columns and also rows in it. This fact means that not the whole z-space is used, but a small subspace in it. To identify this subspace, any of the above described clustering methods can be used. The basis of this subspace can be spanned on cluster centers. Because all clustering techniques except of spectral clustering can produce a non-orthogonal basis, the decomposition formula should generally use a dual basis:

$$z_{ij} = \Sigma_{k=1..Nexp, p=1..Nclust} (z_{ik} \, zc_{pk}) \, zc'_{pj}, \quad zc'_{pj} = \Sigma_{q=1..Nclust} G^{-1}_{pq} \, zc_{qj},$$

$$G_{pq} = \Sigma_{n=1..Nexp} (zc_{pn} \, zc_{qn}).$$

Here, zc' is the dual basis to zc, G is the Gram matrix of the basis zc. Rewriting this formula in terms of correlators, and expressing dx

$$dx_{ij} = sqrt(N_{exp}) rms(x_i) \, \Sigma_{p=1..Nclust} corr(clust_p, x_i) zc'_{pj}$$

as a result, the whole data matrix can be expressed as a sum of $N_{clust}$ terms found earlier with the corr(clustPOI,*) algorithm. The advantage of such representation is that $N_{clust}$ =rank<< $N_{exp}$ leading to a reduction of storage and the possibility to accelerate all processing operations applied to this matrix. Particularly, non-linear metamodeling of bulky data represents an interpolated result as a weighted sum:

$$dx^*_i = \Sigma_{j=1..Nexp} dx_{ij} \, w_j.$$

With the clustering representation above this gives

$$dx^*_i = sqrt(N_{exp}) rms(x_i) \, \Sigma_{p=1..Nclust} corr(clust_p, x_i) \, g_p, \quad g_p = \Sigma_{j=1..Nexp} (zc'_{pj} \, w_j)$$

providing an acceleration factor of $N_{exp} / N_{clust}$, compared with the direct computation of the weighted sum.

A similar representation can be written for spectral clustering:

$$dx^*_i = sqrt(N_{exp}) rms(x_i) \, \Sigma_{p=1..Nclust} \Sigma_{ip} \, g_p \;, \quad g_p = \Sigma_{j=1..Nexp} (V_{jp} \, w_j)$$

$$\Psi = ZV, \quad \Psi_{ip} = (z_i, zc_p) = corr(clust_p, x_i),$$

where columns of V define centers of clusters and

$$V_{jp} = zc_{pj} = zc'_{pj},$$

because the V-basis is self-dual.

A further advantage of RBF metamodeling is that it allows not only to interpolate data in a new parameter point, but also to estimate precision of this interpolation. In an existing data point, this precision can be estimated using a known cross-validation procedure: the data point is removed, data are interpolated to this point and compared with the actually measured value at this point. Formally, for this comparison one needs to construct a new metamodel where the data point is removed. For an RBF metamodel with detrending this step can be performed analytically, resulting in the following direct formula:

$$err_i = f_{interpol}(par_i) - f_{actual}(par_i) = -c_i/(\Phi^{-1})_{ii}$$

where $c_i$ and $\Phi$ were defined above. In between data points, the so-estimated error can be interpolated, using e.g. the same RBF weights $w_i$. The error formula above is applicable also for bulky data, since

$$c_{pi} = \Sigma_{j=1..Nexp} (\Phi^{-1})_{ij} dx_{pj}, \quad p=1.. N_{data}, \quad i=1.. N_{exp}$$

is represented as a weighted sum of data items and correlation clustering allows accelerating its computation as well.

As explained above, the data analyzer 130 may control a precision of the metamodeling based on a cross-validation.

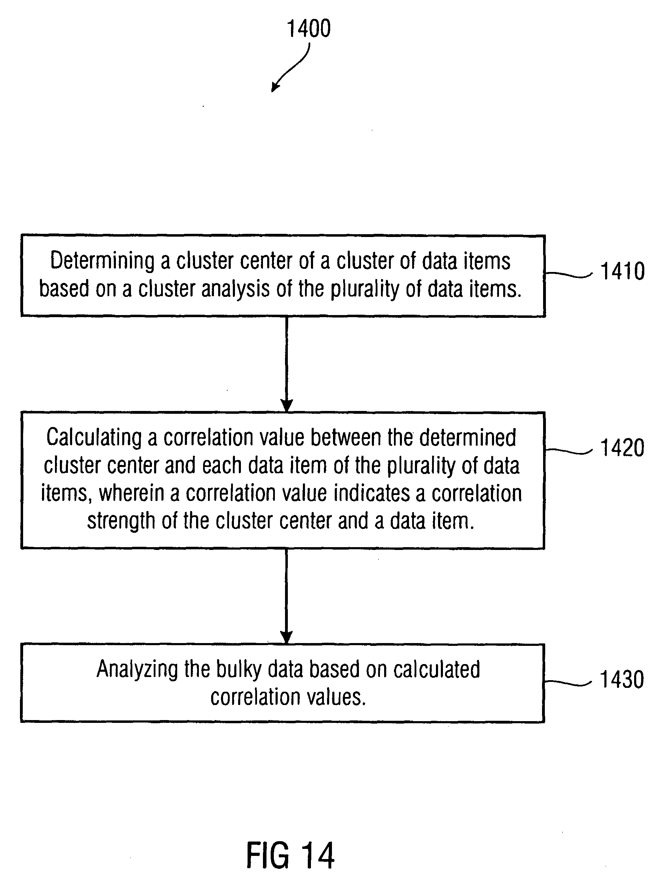

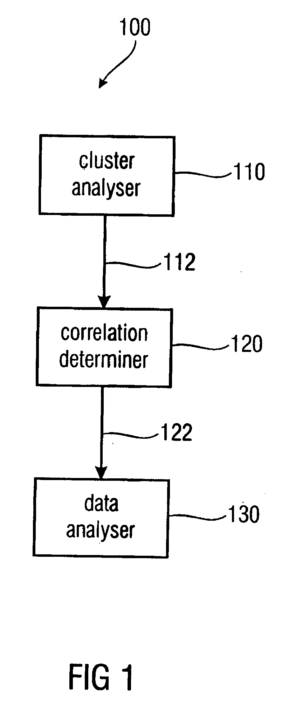

Fig. 14 shows a flow chart of a method 1400 for analyzing bulky data according to an embodiment of the invention. The bulky data comprises a plurality of data items, each data item comprising a data value for each experiment of a plurality of experiments by which the bulky data was obtained. The method 1400 comprises determining 1410 a cluster center of a cluster of data items, calculating 1420 correlation values and analyzing 1430 the bulky data. The cluster center of the cluster of data items is determined 1410 based on a cluster analysis of the plurality of data items. Further, a correlation value is calculated 1420 between the determined cluster center and each data item of the plurality of data items. A correlation value indicates a correlation strength of the cluster center and a data item. Further, the bulky data is analyzed 1430 based on calculated correlation values.

The method 1400 may comprise additional, optional steps representing features of the inventive concept mentioned above.

Some embodiments according to the invention relate to a correlation clustering of bulky data and its application in the analysis of crash-test data and fields with similar phenomena.

For example, a method for the analysis of crash-test data and fields with similar phenomena is disclosed which allows accelerating scatter analysis, causal analysis, sensitivity analysis and metamodeling of bulky data.

The method consists of the following steps. Firstly, a number of crash-test simulations or real experiments is performed and stored in the database. Secondly, correlation clustering of data items in the database is performed. Thirdly, a list of points of interest (POI) is formed including cluster centers, user defined points and variations of design parameters. Fourthly, one-pass computation of scatter and correlator of all data items with the POI list is performed. Fifthly, a partition diagram is set up. Sixthly, scatter and causal analysis is performed based on Pareto ranking of scatter and correlator data. Seventhly, linear sensitivity analysis is performed using correlator of parameter variations with the POI list. Eighthly, non-linear sensitivity analysis and metamodeling of bulky data are performed based on reconstruction of database in terms of correlation clusters.

Crash-test simulations possess a stochastic component, related with physical and numerical instabilities of underlying crash model and uncertainties of its control parameters.

Scatter analysis is a characterization of this component, usually in terms of scatter amplitude distributed on the model's geometry and evolving in time. This allows identifying parts of the model, possessing large scatter and most non-deterministic behavior. The purpose is to estimate reliability of numerical results and do corresponding tolerance predictions.

Causal analysis is determination of cause-effect relationships between events. In context of crash-test analysis, this usually means identification of events or properties causing the scatter of the results. This allows to find sources of physical or numerical instabilities of the system and helps to reduce or completely eliminate them.

Causal analysis is generally performed by means of statistical methods, particularly, by estimation of correlation of events. It is commonly known that correlation does not imply causation (this logical error is often referred as "cum hoc ergo propter hoc": "with this, therefore because of this"). Instead, strong correlation of two events does mean that they belong to the same causal chain. Two strongly correlated events either have direct causal relation or they have a common cause, i.e. a third event in the past, triggering these two ones. This common cause will be revealed, if the whole causal chain i.e. a complete sequence of causally related events will be reconstructed. Practical application of causal analysis requires formal methods for reconstruction of causal chains.

Sensitivity analysis considers dependence of the numerical result on variation of control parameters. It allows to identify the parameters possessing most influence to the result and the parts of the model where the impact of such variation is considerable.

Metamodeling of simulation results allows making prediction for the model behavior at new values of control parameters, where no simulation has been done yet. These values of parameters are usually intermediate in respect to existing ones, where simulations are available. Predictions are needed for analysis and optimization of product properties during the design stage and are usually completed with a control simulation done at the optimal parameter values.

Solution of all these tasks can be significantly accelerated using correlation clustering methods described before.

Some embodiments according to the invention relate to a method for crash-test data analysis comprising performing a number of crash-test simulations or real experiments and storing the results in a database, correlation clustering of data items in the database and analysis of the cluster data.

According to an aspect of the invention, a z-score representation is used for the correlation clustering. Further, the correlation clustering may be performed using a density-based clustering technique, a k-means clustering technique, a dendrogram clustering technique or a spectral clustering technique.

According to another aspect of the invention, the correlation clustering may be accelerated by intermediate cleaning or subsampling technique.

Further, a list of points of interest (POI) may be formed including cluster centers and/or user defined points and/or variations of design parameters.

The results of the correlation clustering may be presented in form of the partition diagram.

According to another aspect of the invention, scatter and/or causal analysis may be performed based on scatter and/or correlator data. The causal analysis may be performed by reconstructing causal chains using Pareto ranking of correlated data (correlation values).

Further, a linear sensitivity analysis may be performed using correlator (a correlation value) of parameter variations with the points of interest (POI) list.

Alternatively or additionally, a non-linear sensitivity analysis and/or metamodeling of bulky data may be performed based on a reconstruction of the database in terms of correlation clusters. This non-linear sensitivity and/or metamodeling may be performed using multi-quadric radial basis functions (RBF) with detrending. The precision of the metamodeling may be controlled by means of the cross validation procedure.

According to another aspect of the invention, the precision of bulky data reconstruction may be controlled by means of Parseval's criterion.

Further, a non-linear sensitivity measure and global sign of dependence may be evaluated on cross-sections in parameters space as described in the embodiments.

Although some aspects of the described concept have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

**Claims**

1. Computer-implemented method applied to existing bulky data of geometrical models of simulations or experiments in engineering applications in order to interpolate or approximate the result of new simulations, the bulky data comprising a plurality $N_{data}$ of data items $x_i$, wherein each data item $x_i$ comprises a data value $x_{ij}$ for each experiment j of a plurality of experiments $N_{exp}$ by which the bulky data was obtained, the method comprising:

   calculating, for each data item $x_i$, the mean $<x_i>$ of all data values $x_{ij}$ and, for each data value $x_{ij}$, a deviation value $z_{ij}$ as $z_{ij} = (x_{ij} - <x_i>)/(rms(x_i) sqrt(N_{exp}))$, wherein rms() denotes the root mean square deviation and and sqrt() denotes square root;
   determining a plurality of $N_{clust}$ cluster centers $zc_p$ based on cluster analysis of correlation values of deviation vectors $z_i$ of deviation values $z_{ij}$ for each experiment j;
   performing an interpolation or approximation in a subspace of the z-space based on the calculated correlation values and the root mean square deviation of each data item of the plurality of data items, by determining an interpolated or approximated result $dx^*_i$ as a a weighted sum of

$$dx^*_i \;=\; \Sigma_{j=1..Nexp}\, dx_{ij}\, w_j.$$

   where $w_j$ are weights for interpolation and $dx_{ij}$ is

$$dx_{ij} \;=\; sqrt(N_{exp})rms(x_i)\, \Sigma_{p=1..Nclust}\, corr(clust_p, x_i)zc'_{pj}$$

   where $corr(clust_p, x_j)$ are the correlation strengths of the cluster center p and the respective data item $x_i$, zc' denotes a dual basis to cluster centers $zc_p$.

2. Method according to claim 1, wherein the list of points of interest additionally comprises at least one user-defined point of interest and variations of design parameters,

3. Method according to claim 1 or 2, wherein
   each data item is one coordinate of a predefined point at a specific timestamp of a crash test object.

4. Method according to one of the claims 1 to 3, wherein the method comprises determining the cluster center (112) based on a density-based cluster analysis, a k-means cluster analysis, a dendrogram cluster analysis or a spectral cluster analysis of the plurality of data items, wherein the cluster analysis determines cluster center of clusters of data items being strongly correlated data items.

5. Method according to one of the claims 1 to 4, wherein the method comprises calculating the correlation value (122) for each data item of the plurality of data items, so that an absolute value of all calculated correlation values (122) varies between a minimal correlation value indicating a low correlation strength or no correlation and a maximal correlation value indicating a high correlation strength.

6. Method according to one of the claims 1 to 5, wherein comprises calculating the correlation values according to a Pearson correlator.

7. Method according to one of the claims 1 to 6, wherein the method comprises generating a partition diagram based on calculated correlation values (122) to present the results of the analysis of the bulky data.

8. Method according to one of the claims 1 to 7, wherein the method comprises performing a scatter analysis, a causal analysis, a linear sensitivity analysis, or a non-linear sensitivity analysis of the bulky data.

9. Method according to any of claims 6 to 8, wherein the method comprises reconstructing a causal chain based on a Pareto ranking of correlation values (122).

10. Method according to one of the claims 8 to 9, wherein the method comprises adding a data item representing a variation of a control parameter of the experiments and calculating a correlation value (122) between the added data item and each data item of the plurality of data items or calculating a correlation value between the added data item and each determined cluster center, wherein the method comprises determining a sensitivity matrix or a sensitivity vector based on the determined correlation values of the added data item, and performing a linear sensitivity analysis based on the sensitivity matrix or the sensitivity vector.

11. Method according to one of the claims 8 to 10, wherein the method comprises performing a non-linear sensitivity analysis based on a radial basis function.

12. Apparatus according to one of the claims 8 to 11, wherein the method comprises controlling a precision of the metamodeling based on a cross-validation.

13. Method according to one of the claims 1 to 12, wherein $w_i = \sum_j \Phi^{-1}_{ij} \Phi (|par - par_j|)$ where $\Phi_{ij} = \Phi (|par_i - par_j|)$ and $par_i$ is an i-th control parameter, and $\Phi()$ is a Radial basis function.

14. Method according to any of claims 1 to 13, wherein the bulky data is crash test data.

15. Computer program with the program code for performing the method according to claim any of claim 1 to 14, when the computer program runs on a computer or a micro controller.

16. Computer having installed thereon the computer program according to claim 15.

**Patentansprüche**

1. Computerimplementiertes Verfahren, das auf vorhandene voluminöse Daten geometrischer Modelle von Simulationen oder Experimenten bei technischen Anwendungen angewandt wird, um das Ergebnis neuer Simulationen zu interpolieren oder anzunähern, wobei die voluminösen Daten eine Mehrzahl $N_{data}$ von Datenelementen $x_i$ aufweisen, wobei jedes Datenelement $x_i$ einen Datenwert $x_{ij}$ für jedes Experiment j einer Mehrzahl von Experimenten $N_{exp}$ aufweist, durch das die voluminösen Daten erhalten wurden, wobei das Verfahren folgende Schritte aufweist:

   Berechnen, für jedes Datenelement $x_i$, des Mittelwerts $<x_i>$ aller Datenwerte $x_{ij}$ und, für jeden Datenwert $x_{ij}$, eines Abweichungswerts $z_{ij}$ als $z_{ij} = (x_{ij} - <x_i>)/(rms(x_i) sqrt(N_{exp}))$, wobei rms() die Abweichung vom quadratischen Mittelwert bezeichnet und sqrt() Quadratwurzel bezeichnet;
   Bestimmen einer Mehrzahl von $N_{clust}$ Clusterzentren $zc_p$ auf der Basis einer Cluster-analyse von Korrelationswerten von Abweichungsvektoren $z_i$ von Abweichungswerten $z_{ij}$ für jedes Experiment j;
   Durchführen einer Interpolation oder Annäherung in einem Teilraum des z-Raums auf der Basis der berechneten Korrelationswerte und der Abweichung vom quadratischen Mittelwert jedes Datenelements der Mehrzahl von Datenelementen durch Bestimmen eines interpolierten oder angenäherten Ergebnisses $dx^*_i$ als gewichtete Summe von

$$dx^*_i = \sum_{j=1..N_{exp}} dx_{ij}\, w_j,$$

wobei $w_j$ Gewichte zur Interpolation sind und $dx_{ij}$

$$dx_{ij} = sqrt(N_{exp})\,rms(x_i) \sum_{p=1..N_{clust}} corr(clust_p, x_i) zc'_{pj}$$

ist, wobei $corr(clust_p, x_i)$ die Korrelationsstärken des Clusterzentrums p sind und das jeweilige Datenelement $x_i$, zc' eine duale Basis zu Clusterzentren $zc_p$ bezeichnet.

2. Verfahren gemäß Anspruch 1, bei dem die Liste von interessierenden Punkten zusätzlich zumindest einen nutzerdefinierten interessierenden Punkt und Variationen von Entwurfsparametern aufweist.

3. Verfahren gemäß Anspruch 1 oder 2, bei dem
jedes Datenelement eine Koordinate eines vordefinierten Punkts an einem spezifischen Zeitstempel eines Crashtestobjekts ist.

4. Verfahren gemäß einem der Ansprüche 1 bis 3, wobei das Verfahren ein Bestimmen des Clusterzentrums (112) auf der Basis einer dichtebasierten Clusteranalyse, einer k-Means-Clusteranalyse, einer Dendrogramm-Clusteranalyse oder einer Spektralclusteranalyse der Mehrzahl von Datenelementen aufweist, wobei die Clus-teranalyse ein Clusterzentrum von Clustern von Datenelementen bestimmt, die stark korrelierte Datenelemente sind.

5. Verfahren gemäß einem der Ansprüche 1 bis 4, wobei das Verfahren ein Berechnen des Korrelationswerts (122) für jedes Datenelement der Mehrzahl von Datenelementen aufweist, sodass ein Absolutwert aller berechneten Korrelationswerte (122) zwischen einem minimalen Korrelationswert, der eine geringe Korrelationsstärke oder keine Korrelation angibt, und einem maximalen Korrelationswert, der eine hohe Korrelationsstärke angibt, variiert.

6. Verfahren gemäß einem der Ansprüche 1 bis 5, das ein Berechnen der Korrelationswerte gemäß einem Pearson-Korrelator aufweist.

7. Verfahren gemäß einem der Ansprüche 1 bis 6, wobei das Verfahren ein Erzeugen eines Partitionsdiagramms auf der Basis berechneter Korrelationswerte (122) aufweist, um die Ergebnisse der Analyse der voluminösen Daten zu präsentieren.

8. Verfahren gemäß einem der Ansprüche 1 bis 7, wobei das Verfahren ein Durchführen einer Streuanalyse, einer Kausalanalyse, einer Linearempfindlichkeitsanalyse oder eine Nichtlinearempfindlichkeitsanalyse der voluminösen Daten aufweist.

9. Verfahren gemäß einem der Ansprüche 6 bis 8, wobei das Verfahren ein Rekonstruieren einer Kausalkette auf der Basis eines Pareto-Ranking von Korrelationswerten (122) aufweist.

10. Verfahren gemäß einem der Ansprüche 8 bis 9, wobei das Verfahren ein Hinzufügen eines Datenelements, das eine Variation eines Steuerparameters der Experimente darstellt, und ein Berechnen eines Korrelationswerts (122) zwischen dem hinzugefügten Datenelement und jedem Datenelement der Mehrzahl von Datenele-menten oder ein Berechnen eines Korrelationswerts zwischen dem hinzugefügten Datenelement und jedem ermittelten Clusterzentrum aufweist, wobei das Verfahren ein Bestimmen einer Empfindlichkeitsmatrix oder eines Empfindlichkeitsvektors auf der Basis der ermittelten Korrelationswerte des hinzugefügten Datenelements und ein Durchführen einer Linearempfindlichkeitsanalyse auf der Basis der Empfindlich-keitsmatrix oder des Empfindlichkeitsvektors aufweist.

11. Verfahren gemäß einem der Ansprüche 8 bis 10, wobei das Verfahren ein Durchführen einer Nichtlinearempfindlichkeitsanalyse auf der Basis einer radialen Basisfunk-tion aufweist.

12. Vorrichtung gemäß einem der Ansprüche 8 bis 11, wobei das Verfahren ein Steuern einer Genauigkeit des Metamodellierens auf der Basis einer Vergleichsprüfung aufweist.

13. Verfahren gemäß einem der Ansprüche 1 bis 12, bei dem $w_i = \sum_j \Phi^{-1}_{ij} \Phi (|par-par_j|)$, wobei $\Phi_{ij} = \Phi (|par_i - par_j|)$ und

par$_i$ ein i.ter Steuerparameter ist und $\Phi()$ eine radiale Basisfunktion ist.

14. Verfahren gemäß einem der Ansprüche 1 bis 13, bei dem die voluminösen Daten Crashtestdaten sind.

15. Computerprogramm mit dem Programmcode zum Durchführen des Verfahrens gemäß einem der Ansprüche 1 bis 14, wenn das Computerprogramm auf einem Computer oder einer Mikrosteuerung läuft.

16. Computer, auf dem das Computerprogramm gemäß Anspruch 15 installiert ist.

**Revendications**

1. Procédé mis en oeuvre par ordinateur et appliqué à des données volumineuses existantes de modèles géométriques de simulations ou d'expérimentations dans des applications d'ingénierie pour interpoler ou approximer le résultat de nouvelles simulations, les données volumineux comprenant une pluralité $N_{data}$ d'éléments de données $x_i$, où chaque élément de données $x_i$ comprend une valeur de données $x_{ij}$ pour chaque expérimentation j d'une pluralité d'expérimentations $N_{exp}$ par laquelle ont été obtenues les données volumineuses, le procédé comprenant le fait de:

calculer, pour chaque élément de données $x_i$, la moyenne $<x_i>$ de toutes les valeurs de données $x_{ij}$ et, pour chaque valeur de données $x_i$, une valeur d'écart $z_{ij}$ comme $z_{ij} = (x_{ij} - <x_i>) / (rms(x_i) \sqrt(N_{exp}))$, où rms() désigne l'écart quadratique moyen et sqrt() désigne la racine carrée;
déterminer une pluralité de centres de groupe $N_{clust}$ $zc_p$ sur base de l'analyse de groupe de valeurs de corrélation des vecteurs d'écart $z_i$ des valeurs d'écart $z_{ij}$ pour chaque expérimentation j;
effectuer une interpolation ou approximation dans un sous-espace de l'espace z sur base des valeurs de corrélation calculées et de l'écart quadratique moyen de chaque élément de données de la pluralité d'éléments de données, en déterminant un résultat interpolé ou approximé $dx^*_i$ comme somme pondérée de

$$dx^*_i = \sum_{j=1..N\exp} dx_{ij} w_j.$$

où $w_j$ sont des poids pour l'interpolation et $dx_{ij}$ est

$$dx_{ij} = sqrt(N_{\exp}) rms(x_i) \sum_{p=1,.Nclust} corr(clust_p, x_i) zc'_{pj}$$

où $corr(clust_p, x_i)$ sont les intensités de corrélation du centre de groupe p, et l'élément de données respectif $x_i$, zc' représente un double base aux centres de groupe $zc_p$.

2. Procédé selon la revendication 1, dans lequel la liste de points d'intérêt comprend en outre au moins un point d'intérêt défini par l'utilisateur et les variations de paramètres de conception.

3. Procédé selon la revendication 1 ou 2, dans lequel
chaque élément de données est une coordonnée d'un point prédéfini à un horodatage spécifique d'un objet de test de collision.

4. Procédé selon l'une quelconque des revendications 1 à 3, dans lequel le procédé comprend le fait de déterminer le centre de groupe (112) sur base d'une analyse de groupe à base de densité, d'une analyse de groupe à k-moyennes, d'une analyse de groupe par dendrogramme ou d'une analyse de groupe spectrale de la pluralité d'éléments de données, dans lequel l'analyse de groupe détermine le centre des groupes d'éléments de données qui sont des éléments de données fortement corrélés.

5. Procédé selon l'une quelconque des revendications 1 à 4, dans lequel le procédé comprend le fait de calculer la valeur de corrélation (122) pour chaque élément de données de la pluralité d'éléments de données, de sorte qu'une valeur absolue de toutes les valeurs de corrélation calculées (122) varie entre une valeur de corrélation minimale indiquant une faible intensité de corrélation ou pas de corrélation et une valeur de corrélation maximale qui indique une haute intensité de corrélation.

**6.** Procédé selon l'une des revendications 1 à 5, dans lequel le procédé comprend le fait de calculer les valeurs de corrélation en fonction d'un corrélateur de Pearson.

**7.** Procédé selon l'une des revendications 1 à 6, dans lequel le procédé comprend le fait de générer un diagramme de partition sur base des valeurs de corrélation calculées (122) pour présenter les résultats de l'analyse des données volumineuses.

**8.** Procédé selon l'une quelconque des revendications 1 à 7, dans lequel le procédé comprend le fait de réaliser une analyse de dispersion, une analyse des causes, une analyse de sensibilité linéaire, ou une analyse de sensibilité non linéaire des données volumineuses.

**9.** Procédé selon l'une quelconque des revendications 6 à 8, dans lequel le procédé comprend le fait de reconstruire une chaîne de causes en fonction d'un classement de Pareto des valeurs de corrélation (122).

**10.** Procédé selon l'une des revendications 8 à 9, dans lequel le procédé comprend le fait d'ajouter un élément de données représentant une variation d'un paramètre de contrôle des expérimentations et de calculer une valeur de corrélation (122) entre l'élément de données ajouté et chaque élément de données de la pluralité d'éléments de données ou de calculer une valeur de corrélation entre l'élément de données ajouté et chaque centre de groupe déterminé, dans lequel le procédé comprend le fait de déterminer une matrice de sensibilité ou un vecteur de sensibilité sur base des valeurs de corrélation déterminées de l'élément de données ajouté, et de réaliser une analyse de sensibilité linéaire sur base de la matrice de sensibilité ou du vecteur de sensibilité.

**11.** Procédé selon l'une des revendications 8 à 10, dans lequel le procédé comprend le fait de réaliser une analyse de sensibilité non linéaire sur base d'une fonction de base radiale.

**12.** Dispositif selon l'une des revendications 8 à 11, dans lequel le procédé comprend le fait de contrôler une précision de la méta-modélisation sur base d'une validation croisée.

**13.** Procédé selon l'une des revendications 1 à 12, dans lequel $w_i = \sum_j \Phi^{-1}_{ij} \Phi(|par - par_j|)$, où $\Phi_{ij} = \Phi(|par_i - par_j|)$ et $par_i$ est un i-ième paramètre de contrôle et $\Phi()$ est une fonction de base radiale.

**14.** Procédé selon l'une quelconque des revendications 1 à 13, dans lequel les données volumineuses sont des données de test de collision.

**15.** Programme d'ordinateur avec le code de programme pour réaliser le procédé selon l'une quelconque des revendications 1 à 14 lorsque le programme d'ordinateur est exécuté sur un ordinateur ou un microcontrôleur.

**16.** Ordinateur présentant, y installé, le programme d'ordinateur selon la revendication 15.

FIG 1

200

202

data item
adapter

240

242

cluster
analyser

110

112

correlation
determiner

120

122

data
analyser

130

FIG 2

FIG 3

FIG 4

FIG 5

EP 2 601 618 B1

FIG 6

FIG 7

FIG 8

FIG 9

clust(p)

par(k)

FIG 10

X
Y
Z

X
Y
Z

t1

t2

FIG 11

t=40ms

source

t=60ms

causal chain

t=110ms

destination

FIG 12

FIG 13

EP 2 601 618 B1

1400

Determining a cluster center of a cluster of data items based on a cluster analysis of the plurality of data items. — 1410

Calculating a correlation value between the determined cluster center and each data item of the plurality of data items, wherein a correlation value indicates a correlation strength of the cluster center and a data item. — 1420

Analyzing the bulky data based on calculated correlation values. — 1430

FIG 14

100

cluster
analyser — 110

— 112

correlation
determiner — 120

— 122

data
analyser — 130

FIG 1

## REFERENCES CITED IN THE DESCRIPTION

**Patent documents cited in the description**

- DE 10207503
- EP 1338883 A

- US 7386425 B

**Non-patent literature cited in the description**

- **ACKERMANN et al.** *Weimar, Optimization and Stochastic Days 5.0,* 20 November 2008